Europäisches Patentamt

European Patent Office

Office européen des brevets

(19)

(11) Veröffentlichungsnummer: **0 286 576 B1**

(12) # EUROPÄISCHE PATENTSCHRIFT

(45) Veröffentlichungstag der Patentschrift:
09.10.91 Patentblatt 91/41

(51) Int. Cl.⁵: **B60P 1/64**

(21) Anmeldenummer: 88730058.0

(22) Anmeldetag: 10.03.88

(54) Transportfahrzeug.

(30) Priorität: 04.12.87 DE 3741624
29.05.87 DE 3718532
10.03.87 DE 3707975

(43) Veröffentlichungstag der Anmeldung:
12.10.88 Patentblatt 88/41

(45) Bekanntmachung des Hinweises auf die
Patenterteilung:
09.10.91 Patentblatt 91/41

(84) Benannte Vertragsstaaten:
AT BE DE FR GB IT NL SE

(56) Entgegenhaltungen:
DE-A- 1 961 678
DE-A- 2 049 748
DE-A- 2 248 350
DE-A- 2 617 638

(56) Entgegenhaltungen:
DE-A- 3 523 745
DE-U- 6 751 093
GB-A- 2 137 940
US-A- 3 957 166

(73) Patentinhaber: ABS-TRANSPORT GMBH
Fritz-Reuter-Strasse 4
W-1000 Berlin 62 (DE)

(72) Erfinder: Kasischke, Michael
Schlettstadter Strasse 12
W-1000 Berlin 37 (DE)
Erfinder: Deike, Ingo
Wilseder Strasse 8
W-1000 Berlin 41 (DE)

(74) Vertreter: Maikowski, Michael, Dipl.-Ing. Dr.
Patentanwälte Maikowski & Ninnemann
Xantener Strasse 10
W-1000 Berlin 15 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betriff ein Transportfahrzeug nach dem Oberbegriff des Patentanspruchs 1.

Transportfahrzeuge dienen zum Transport gefüllter Silos zu Baustellen, zum Abtransport geleerter Silos von Baustellen und zum Aufnehmen und Absetzen insbesondere von Entsorgungscontainern, wie beispielsweise Schuttoder Abfallcontainern Aktenvernichtungscontainern und dergleichen. Die DE-A-2248350 beschreibt ein derartiges Transportfahrzeug, welches ein speziell ausgelegtes Hebezeug aufweist, mit dem nur ein in vorbestimmter Weise ausgerüsteter Silo-/Containertyp auf das Fahrzeug aufgesetzt und von diesem abgesetzt werden kann. Der Einsatz des Transporfahrzeuges ist auf einen vorbestimmten Silo- oder Containertyp beschränkt. Die bekannten luftgefederten Transportfahrzeuge sind lediglich für eine Fahrt auf befestiten Verkehrswegen ausgelegt.

Ver- und Entsorgungstransportfahrzeuge müssen aber sowohl auf Straßen als auch im Gelände, beispielsweise auf unbefestigten Baustellen, voll fahr- und manövrierfähig sein, um die Zulieferung und den Abtransport sowohl von Silos als auch von Containern, insbesondere Entsorgungscontainern, sicher durchführen zu können. Neben dieser Forderung an das Fahrzeug sollte das Fahrzeug Hebezeuge aufweisen, die mit den gängigen Silo- und Containertypen kompatibel und derart gestaltet sind, daß dieses Fahrzeug sowohl als insbesondere mehrachsiges Motorfahrzeug (LKW) als auch als ein- oder mehrachsiger Sattelauflieger verwendet werden kann.

Der Erfindung liegt die Aufgabe zu Grunde, ein Transportfahrzeug zur Verfügung zu stellen, das die vorgenannten Bedingungen erfüllt.

Erfindungsgemäß wird diese Aufgabe durch die technische Lehre des Patentanspruchs 1 gelöst.

Mit Vorteil ist auf den Längsträgern jeweils eine Container-Silo-Aufnahmeschiene verfahrbar geführt, zwischen denen mindestens zwei Längsführungen im Abstand voneinander angeordnet sind. Diese Ausbildung ermöglicht in vorteilhafter Weise an diesen sowohl einen Hakenschlitten als auch einen Silo-Aufnahmeschlitten verfahrbar zu führen, so daß sowohl Silos als auch Container vom gleichen Fahrzeug mit er gleichen Brücke transportiert werden können.

Eine besonders robuste und einfache Konstruktion wird dadurch erzielt, daß der Kipprahmen zwei Längsträger aufweist, die in vorteilhafter Weise als Kasten-Hohlprofile ausgebildet sind, deren oben liegende Seite einen Längsschlitz aufweist. Auf diesen Längsträgern ist jeweils eine Container-Silo-Aufnahmeschiene verfahrbar geführt. Jede dieser Container-Silo-Aufnahmeschienen weist bei einer vorteilhaften Ausführungsform ein Flachstahlprofil auf, von dem sich ein Steg durch den Längsschlitz des Längsträgers erstreckt, in dessen Kasten-Hohlprofil ein in diesem verschiebbares, formschlüssig geführtes Kastenprofil eingesetzt ist, das mit dem Steg verbunden ist. Diese eingesetzten, formschlüssig geführten Kastenprofile sind mittels Arbeitskolben, die in die Kasten-Hohlprofile der Längsträger eingebaut sind, synchron verfahrbar.

Neben dieser Hebezeugausbildung sind erfindungsgemäß mit Vorteil weitere Hebezeuge am Kipprahmen vorgesehen, die wenigstens zwei zwischen den Längsträgern im Abstand voneinander angeordnete Längsführungen aufweisen. Bei einer vorteilhaften Ausführungsform sind diese Längsführungen innen neben den Kasten-Hohlprofilen der Längsträger angeordnete Kasten-Hohlprofile, deren Oberseite einen Längsschlitz aufweist.

An diesen Längsführungen ist als weiteres Hebezeug ein Hakenschlitten verfahrbar geführt. An diesen Längsführungen ist ferner als Hebezeug ein Silo-Aufnahmeschlitten ebenfalls verfahrbar geführt.

Der Hakenschlitten weist eine an den Längsführungen des Kipprahmens geführte Gleitplatte auf. Bei einer bevorzugten Ausführungform dieser Gleitplatte sind an der Oberseite Seilanschläge montiert, damit dieser Hakenschlitten für einen Betrieb mit Seilabrollcontainern eingesetzt werden kann.

An der heckseitigen Querkante der Gleitplatte ist eine hydraulisch verschwenkbare Kippplatte angelenkt, auf der an zwei im Abstand voneinander, senkrecht zu deren Querkanten verlaufenden Schwenklagern zwei hydraulisch verschwenkbare, gewölbte Hakenschalen montiert sind, an deren Enden Haken angelenkt sind. Bei einer bevorzugten Ausführungsform sind zum Verschwenken der Kippplatte zwei an deren frontseitigen Eckabschnitten und an den Hakenschalen angelenkte Arbeitszylinder vorgesehen, mit denen der Haken in eine Stellung zur Aufnahme einer Container-/Siloöse oder in andere Arbeitsstellungen gebracht werden kann. Bei dieser Ausführungsform sind ferner im Bereich der Seitenkanten der Kippplatte und an den Hakenschalen weitere Arbeitszylinder angelenkt, mit denen in vorteilhafter Weise die gewölbten Hakenschalen in eine, einen Silo teilweise umfaßende Stellung gebracht werden können. Die an den Hakenschalen angelenkten Haken weisen jenseits der Schwenklager vorspringende Abschnitte auf, durch die die schwenkbar gelagerten Haken bei Aufnahme eines runden Silos angedrückt werden.

Zum Verfahren des Hakenschlittens sind an dessen Unterseite in die Längsführungen am Kipprahmen eingreifende Führungselemente angeordnet. Bei einer bevorzugten, vorteilhaften Ausführungsform ist am Kipprahmen in der Mitte zwischen den Kasten-Hohlprofilen der Längsträger ein drittes Kasten-Hohlprofil mit Längsschlitz an der Oberseite montiert. An der Unterseite der Gleitplatte sind an deren Kanten und in deren Mitte an Stegen Kasten-Längsprofile montiert, die in den drei Kasten-Hohlprofilen formschlüssig geführt sind.

Zwei der an der Unterseite der Gleitplatte montierten Führungselemente, die in die Längsführungen eingreifen, stehen in Antriebsverbindung mit am Kipprahmen montierten, angetriebenen Ketten- oder Seilzügen.

Bei einer bevorzugten Ausführungsform sind am Kipprahmen zwei Ketten- oder Seilzüge montiert. Am Kopfende des Kipprahmens ist ein Hydro-Motor-Antrieb vorgesehen, der Antriebsrollen oder -räder für Ketten- oder Seilzüge antreibt. Je ein Seilzug ist durch je eine Längsführung geführt und greift an den Enden der Führungselemente des Hakenschlittens an. Es sind Umlenkrollen für die Seilzüge vorgesehen. Für das rücklaufende Trumm sind neben dem mittleren Kasten-Hohlprofil mit Schlitz zwei geschlossene Hohlprofile vorgesehen. Durch diese Ausführungsform werden beide außen liegenden Führungselemente des Hakenschlittens gleichzeitig zugbeaufschlagt.

Der Silo-Aufnahmeschlitten weist eine an den Längsführungen geführte Schlittenplatte auf, an deren Unterseite in die Längsführungen eingreifende Führungselemente angeordnet sind, die wahlweise mit den am Kipprahmen montierten, angetriebenen Ketten- oder Seilzügen in Eingriff bringbar sind. Mit besonderem Vorteil sind bei einer bevorzugten Ausführungsform an der Unterseite der Schlittenplatte zwei Kasten-Hohlprofile als Führungselemente mittels eines Steges montiert. Diese Kasten-Hohlprofile werden formschlüssig in den Kasten-Hohlprofilen der Längsführungen geführt. Die Seil- oder Kettentrumme des Seil- oder Kettenantriebes sind in vorteilhafter Weise frei durch diese Kasten-Hohlprofile hindurchgeführt. In diesen Kasten-Hohlprofilen sind von außen betätigbare Einrichtungen, insbesondere Klemmvorrichtungen oder Kettenschlösser, angeordnet, mit denen in lösbarer Weise diese Kasten-Hohlprofile und damit die Schlittenplatte in Antriebsverbindung mit den Ketten oder -seilzügen gebracht werden können.

In der Schlittenplatte sind an Schwenklagern, in wahlweise vorbestimmten Winkellagen gegenüber der Schlittenplatte festlegbare Schwingen gelagert. An diesen Schwingen sind Silo-Aufnahmezapfen montiert. Die Einstellbarkeit dieser Schwingen ist vorgesehen, um die Lage der Silo-Aufnahmezapfen an die Lage der Taschen an Silos unterschiedlichen Durchmessers anzupassen. Bei einer bevorzugten Ausführungsform werden die Schwingen in ihrer Lage durch Hebel festgelegt, deren eines Ende in der Schlittenplatte schwenkbar gelagert ist und deren anderes Ende an eines von mehreren Augen festgelegt werden kann. Die Augen sind an der Unterseite der Schwinge montiert oder ausgebildet.

Am Kopf des Kipprahmens ist ein Hydro-Motor-Antriebsaggregat vorgesehen. Dieses Hydro-Motor-Antriebsaggregat steht mit einer Seilabrolleinrichtung in Antriebsverbindung. Bei einer bevorzugten Ausführungsform weist diese Seilabrolleinrichtung eine Seilwinde auf. Dieses Seil kann zum Betrieb mit, für eine Seilabrollung ausgerüsteten Silos- und/oder Containern verwendet werden. Dieses Hydro-Motor-Antriebsaggregat treibt ferner die Ketten- oder Seilzüge an.

Erfindungsgemäß ist das im vorstehenden beschriebene Transportfahrzeug derart gestaltet, daß mit dem Fahrzeug, beispielsweise als Lkw oder Sattelauflieger sowohl im Gelände als auch auf befestigten Straßen und insbesondere auf unbefestigten Baustellen eine volle Fahr- und Manövrierfähigkeit erzielt werden kann. Insbesondere soll neben der Fahrtüchtigkeit auf unterschiedlichen Fahrbahnen ein Manövrieren auf kleinstem Raum ermöglicht werden. Zu diesem Zweck ist mit Vorteil wenigstens eine der Fahrzeugachsen des Transportfahrzeuges mittels einer gesonderten Lenkung frei dreh- und lenkbar und ggf. nachlaufgelenkt ausgebildet. Die Lagerung der lenkbaren Achse oder lenkbaren Achsen kann bei einer Ausführungsform an einem Drehschemel erfolgen. Bei mehrachsigen Fahrzeugen ist diese Drehschemelachse mit Vorteil nachlaufgelenkt. Bei einer anderen Ausführungsform erfolgt die Ausbildung der lenkbaren Achse als Achsschenkellenkung, die bei mehrachsigen Fahrzeugen nachlaufgelenkt sein kann. Mit besonderem Vorteil ist die frei lenkbare Achse in der Geradeauslaufstellung arretierbar. Es ist eine Arretiervorrichtung vorgesehen, die mit Vorteil eine konische Nut an der lenkbaren Lagerung aufweist, in die ein Arretierkeil eingreifen kann. Zur Lenkung der frei lenkbaren Fahrzeugachse greift an dieser mindestens ein Lenkzylinder an. Bei Ausfall der Lenkung der Achse wird diese durch die Arretiervorrichtung in der Geradeauslaufstellung gehalten. Weiterhin kann wenigstens eine der Fahrzeugachsen als Liftachse ausgebildet sein. Hierdurch ist eine Anpassung an die Last möglich.

Wenigstens eine der Fahrzeugachsen kann mit Vorteil in Längsrichtung des Transportfahrzeuges verschiebbar sein. Hierdurch wird eine Einstellung des Achsdruckes ermöglicht. Weiterhin kann durch eine Verschiebung einer lenkbaren Achse die Manövrierfähigkeit des Fahrzeuges an gegebene Bedingungen angepaßt werden. Insbesondere können bei drehschemelgelagerten Achsen diese über die Drehachse des Drehschemels hinweggeschoben werden. Dadurch wird auch bei Rückwärtsfahrt eine Nachlaufsteuerung gewährleistet und die sonst erforderlichen Achsarretierungen entfallen.

Bei den betrachteten Fahrzeugen, die eine Luftfederung aufweisen, ist es für viele Einsatzfälle erforderlich, die Luftfederung derart zu gestalten, daß sowohl eine niedrige Fahrhöhe bei kleinem Achsausgleich als auch eine Geländetauglichkeit bei großem Achsausgleich erreicht werden können. Luftgefederte Fahrzeuge weisen bekanntlich Luftdrucksteuerventile an der abgefederten Achse auf, deren Steuerelemente mittels einer Schwinge einstellbar sind, die über ein Einstellglied mit dem Fahrzeug verbunden sind. Dieses Einstellglied wird vom Fahrzeughersteller eingestellt und arretiert.

Erfindungsgemäß ist dieses Einstellglied als mit einer Rückholfeder beaufschlagter luftdruckgesteuerter Stellzylinder ausgebildet. Mit diesem Stellzylinder kann die Schwinge in vorbestimmte Endlagen gebracht werden, so daß vorbestimmte Steuerzustände am Luftdrucksteuerventil und damit vorbestimmte Beaufschlagungen der Luftfeder erfolgen können.

Mit Vorteil sind ferner an der Unterseite des Fahrzeugaufbaurahmens unklappbare und aus- und einfahrbare Stützbeine montiert.

Ausführungsbeispiele der Erfindung sollen in der folgenden Beschreibung unter Bezugnahme auf die Fig. der Zeichnung erläutert werden.

Es zeigen :

Fig. 1 + 2 schematische Seitenansichten eines Transportfahrzeuges
Fig. 3 eine Draufsicht auf den hinteren Abschnitt des Fahrzeugaufbaurahmens,
Fig. 4 eine schematische Draufsicht auf den Kipprahmen,
Fig. 5 eine schematische Stirnansicht und Teildraufsicht des Silo-Aufnahmeschlittens,
Fig. 6 eine schematische Stirnansicht des Hakenschlittens,
Fig. 7 eine schematische Draufsicht auf den Hakenschlitten,
Fig. 8 eine Draufsicht auf die Gleitplatte des Hakenschlittens,
Fig. 9 eine schematische Explosionsdarstellung der Bauteile des Aufbaus des Transportfahrzeuges
Fig. 10 eine schematische Darstellung einer lenkbaren Achse,
Fig. 11 eine schematische Darstellung von Achsanordnungen und
Fig. 12 eine Prinzipskizze einer Luftfedersteuerung.

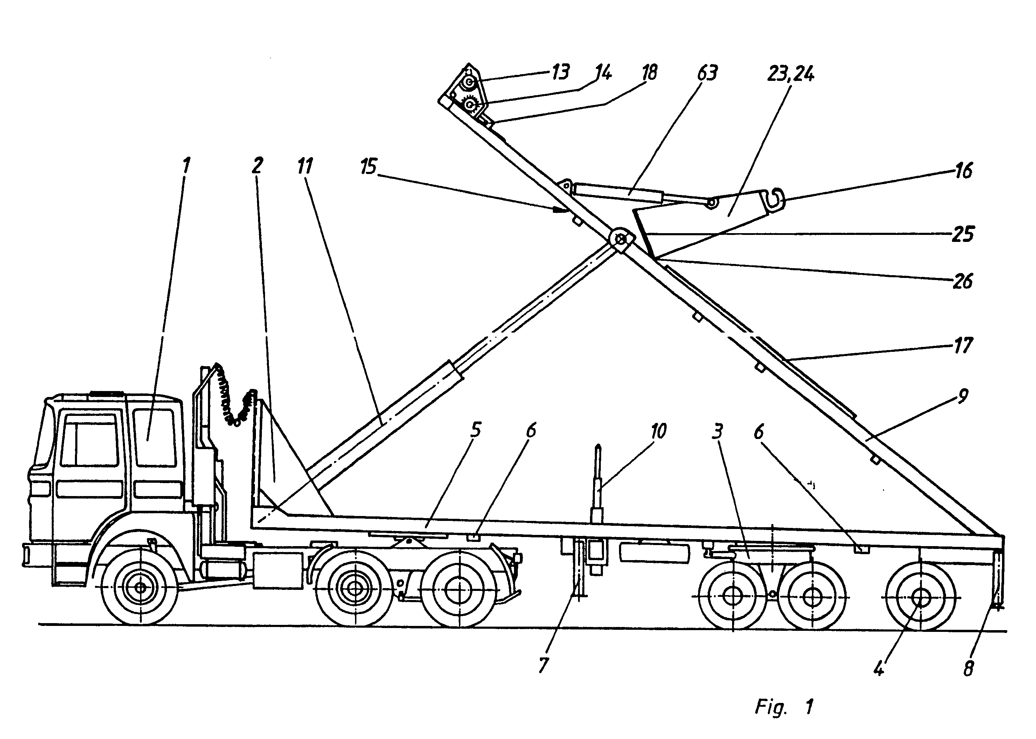

In Fig. 1 ist eine Sattelzugmaschine 1 mit einem Sattelauflieger 2 dargestellt. Dieser Sattelauflieger 2 weist ein gegebenenfalls lenkbares Doppelachsaggregat 3 und eine liftbare Hinterachse 4 auf.

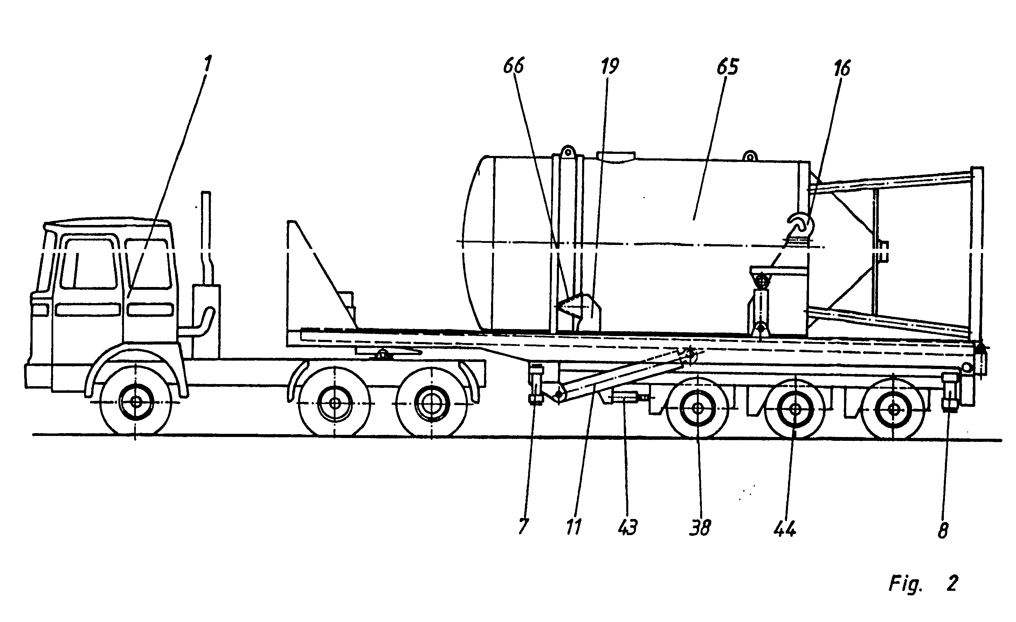

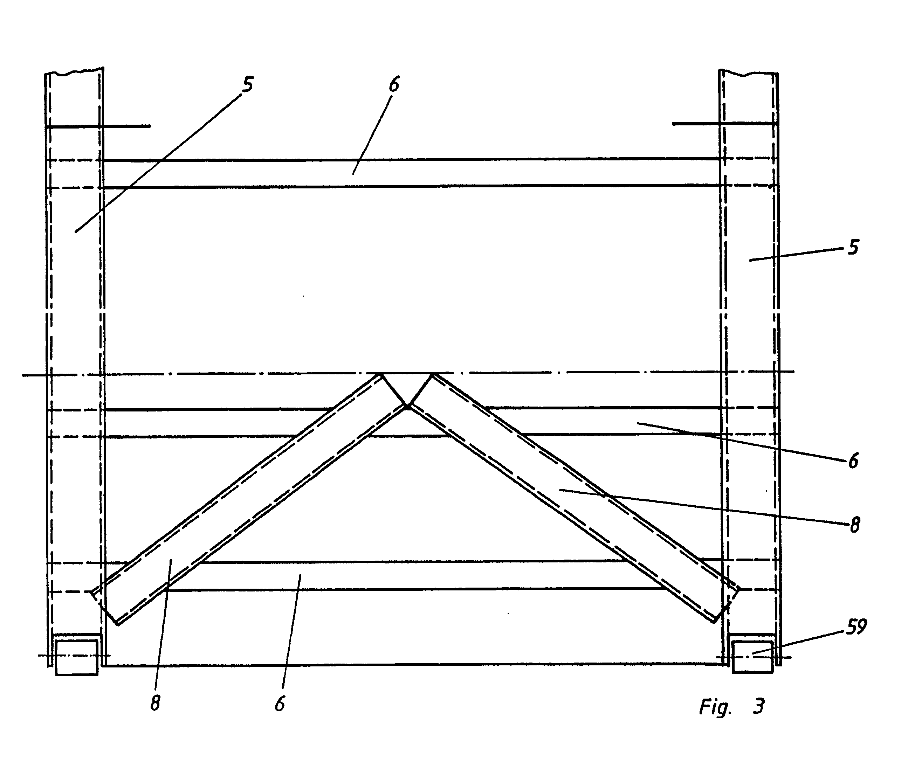

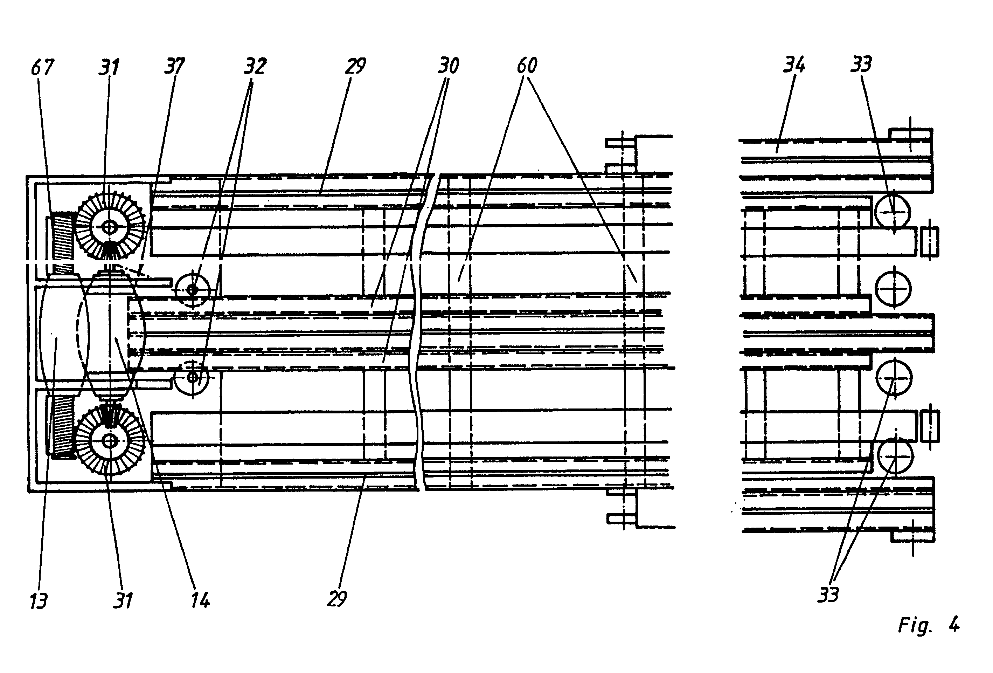

Das Transportfahrzeug weist als Grundgerüst, wie insbesondere Fig. 3 zeigt, zwei Rahmenlängsträger 5 auf, die durch Rahmentraversen 6 miteinander verbunden sind. Wie Fig. 3 ferner zeigt, sind an den Enden der Rahmenlängsträger 5 Abgleitrollen 59 drehbar gelagert. In Fig. 3 sind schematisch umlegbare Stützbeine 8 dargestellt. Fig. 1 + 2 zeigen Stützbeine 7, 8, die in an sich bekannter Weise ausgefahren werden können, um im Betrieb das Fahrgestell zu entlasten. Am Heckende der Rahmenlängsträger 5 ist, wie Fig. 1 zeigt, der Kipprahmen 9 verschwenkbar gelagert.

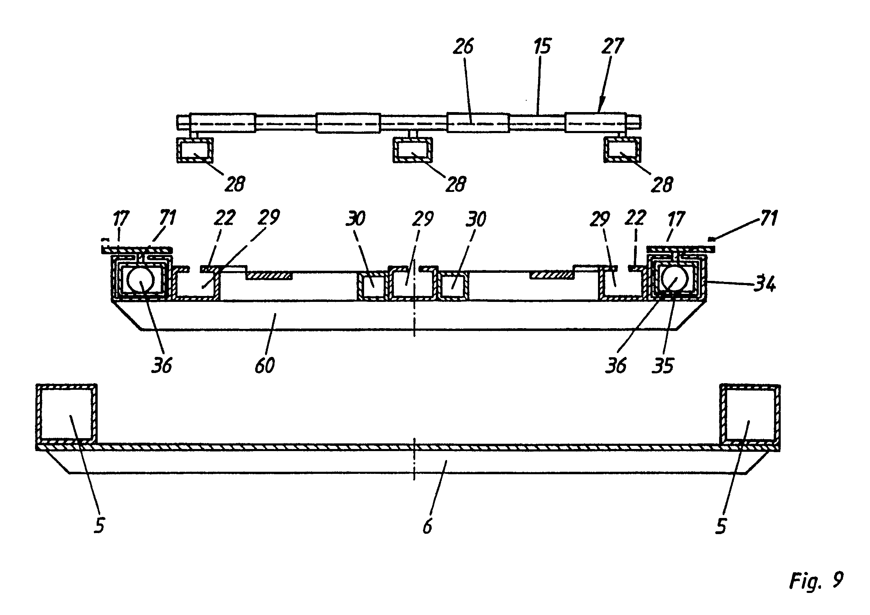

Wie die Fig. 4 und 9 zeigen, weist dieser Kipprahmen 9 Längsträger 34 auf, die als Kasten-Hohlprofile mit Schlitz in der Oberseite ausgebildet sind. Diese Längsträger 34 sind durch Traversen 60 miteinander verbunden.

Der Fig. 9 ist zu entnehmen, daß die Rahmenlängsträger 5 Kastenprofile sind und die Breite und Höhe des Kipprahmens 9 derart ist, daß in der abgesenkten Lage dieser Kipprahmen 9 bündig zwischen die Rahmenlängsträger 5 paßt. In der Mitte des Kipprahmens 9 ist eine weitere Längsführung 29 vorgesehen, die ebenfalls als Kasten-Hohlprofil mit Längsschlitz auf der Oberseite ausgebildet ist. Neben der mittleren Längsführung 29 sind, wie dargestellt, zwei Ketten- oder Seilzugführungen 30 angeordnet, die ebenfalls als Kasten-Hohlprofile ausgebildet sind.

Auf den Längsträgern 34 sind, wie der Fig. 9 zu entnehmen ist, Container-Silo-Aufnahmeschienen 17 verfahrbar angeordnet. Diese Container-Silo-Aufnahmeschienen 17 weisen, wie dargestellt, ein Flachstahlprofil auf. An der Unterseite des Flachstahlprofils ist über einen Steg 71, der sich durch den Längsschlitz im Längsträger 34 erstreckt, ein Kasten-Hohlprofil 35 befestigt, das formschlüssig im Längsträger 34 geführt ist. In Fig. 9 ist auf der rechten Seite schematisch ein Arbeitskolben 36 dargestellt. In den beiden Längsträgern 34 sind auf die Kasten-Hohprofile 35 einwirkende Arbeitskolben 36 derart angeordnet, daß die beiden Container-Silo-Aufnahmeschienen 17 gemeinsam parallel zueinander und synchron verfahren werden können.

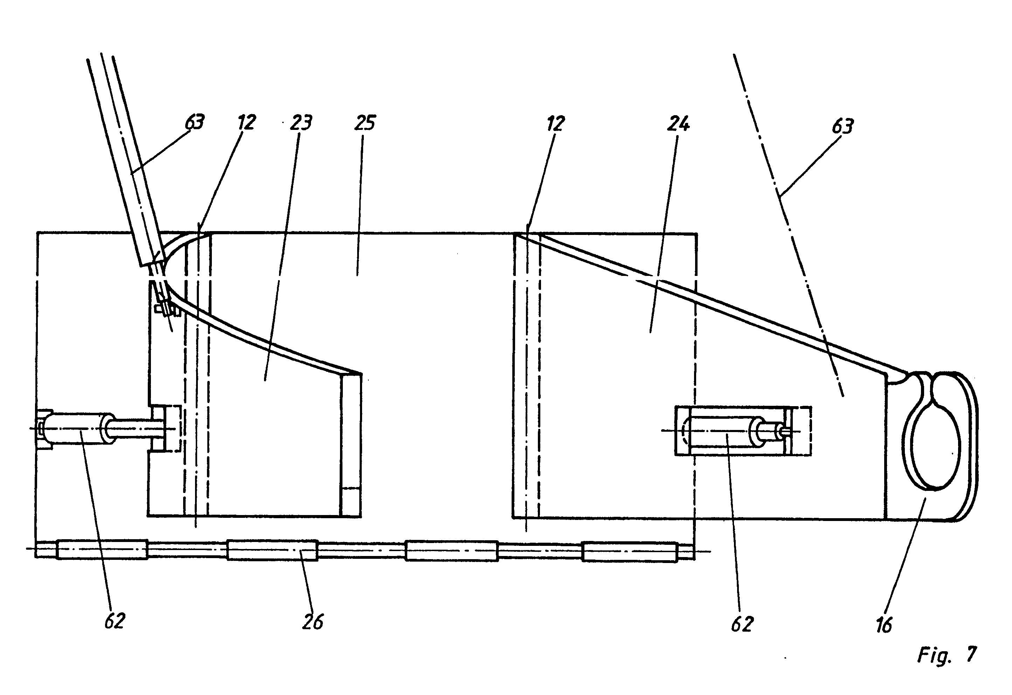

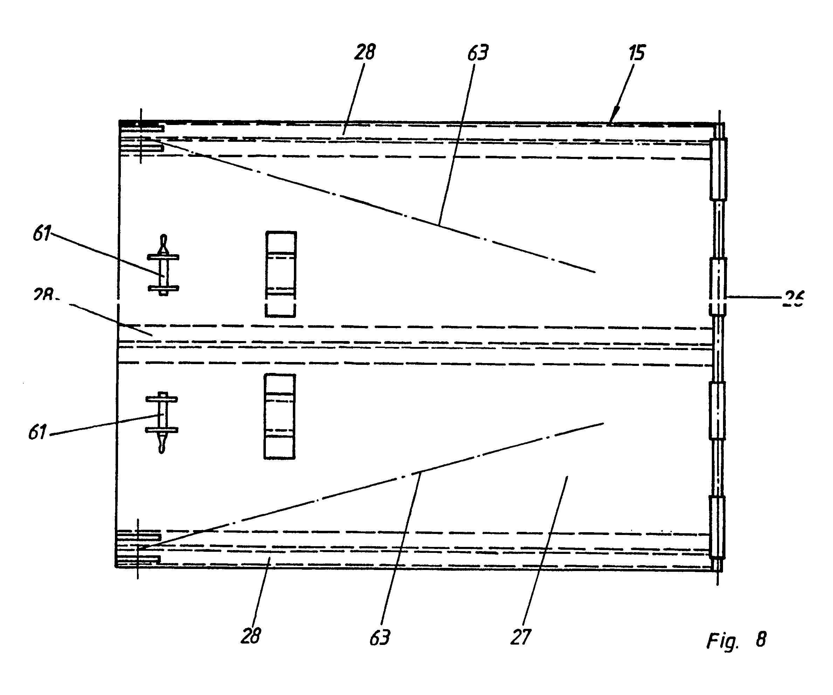

Neben diesem Hebezeug ist am Kipprahmen 9, wie schematisch in den Fig. 1 und 9 veranschaulicht, ein Hakenschlitten 15 verfahrbar montiert. Dieser Hakenschlitten 15 weist die in Fig. 8 dargestellte Gleitplatte 27 auf. Diese Gleitplatte 27 trägt an der Unterseite, wie Fig. 9 zeigt, drei Führungselemente 28, die als Kasten-Hohlprofile ausgebildet sind, die mittels eines Steges an der Unterseite der Gleitplatte 27 befestigt sind. Diese Führungselemente 28 werden formschlüssig in den Längsführungen 29 geführt, wobei sich die in Fig. 9 dargestellten Stege an den Führungselementen 28 durch die Schlitze in den Längsführungen 29 hindurch erstrecken. Der in Fig. 1 dargestellte Hakenschlitten 15 weist an der Oberseite Anschläge 61 (Fig. 8) auf, in die die Zugseile des Hebezeuges eingehängt werden können. An der Querkante 26 der Gleitplatte 27 ist eine Kippplatte 25 angelenkt, die in den Fig. 1 und 7 dargestellt ist.

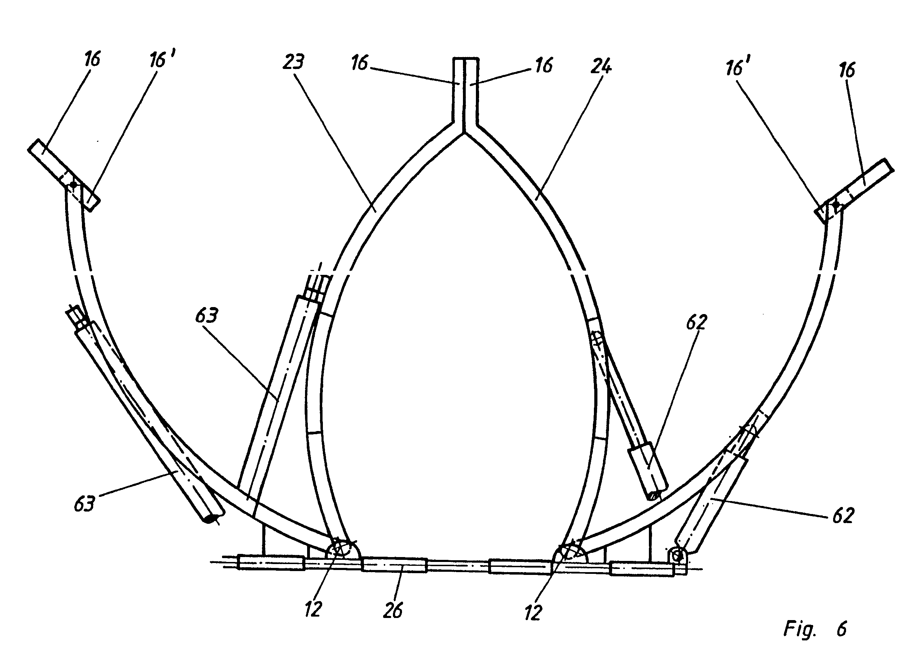

Wie die Fig. 6 und 7 zeigen, sind in dieser Kippplate 25 zwei Schwenklager 12 ausgebildet, die sich im

4

Abstand von den Seitenrändern der Kippplatte 25 und im Abstand zueinander senkrecht zur Querkante 26 erstrecken. An diesen Schwenklagern 12 sind zwei gewölbte Hakenschalen 23, 24 verschwenkbar gelagert. Diese Hakenschalen 23, 24 können durch Verschwenkung in die schematisch in Fig. 6 dargestellten Stellungen gebracht werden. An den Enden dieser gewölbten Hakenschalen 23, 24 sind Haken 16 angelenkt, die, wie in Fig. 6 gezeigt, Ansätze 16' aufweisen, die sich nach innen über die Schwenkachsen hinaus erstrecken. Wenn die gewölbten Hakenschalen 23, 24 die in Fig. 6 dargestellte äußere Lage zur Aufnahme eines runden Silos einnehmen, werden durch die Ansätze 16' die Haken 16 angeklappt. Zur Verschwenkung der gewölbten Hakenschalen 23, 24 sind die dargestellten Arbeitszylinder 62 vorgesehen. In Fig. 1 sind Arbeitszylinder 63 vorgesehen, die an den oberen Ecken der Gleitplatte 27 und an den gewölbten Hakenschalen 23, 24 verschwenkbar gelagert sind. Diese Arbeitszylinder 63 sind ferner schematisch in den Fig. 6-8 eingezeichnet. Mittels dieser Arbeitszylinder kann die Kippplatte 25 gekippt werden, um die Haken 16 in verschiedene Betriebsstellungen zu bringen.

Zum Verfahren des Hakenschlittens 15 sind am Kipprahmen 9 die schematisch in Fig. 4 dargestellten Seil- oder Kettenzüge vorgesehen. In Fig. 4 ist ein Hydro-Motor-Antrieb 14 dargestellt, dessen Antriebswellen Kettenräder 31 antreiben. Über diese Kettenräder 31 laufen Antriebsketten 37. Diese Antriebsketten 37 laufen durch die Längsführungen 29 und greifen auf einer Seite an den Führungselementen 28 der Gleitplatte 27 an. Das Kettentrumm ist ferner an der anderen Seite dieser Führungselemente 28 angeschlagen und läuft über, in Fig. 4 dargestellte, Umlenkrollen 33, durch die Ketten- oder Seilzüge 30 hindurch und über die Umlenkrollen 32 zu den Kettenrädern 31 zurück. Mit dieser Seil- oder Kettenantriebsvorrichtung kann der Hakenschlitten 15 auf dem Kipprahmen 9 verfahren werden.

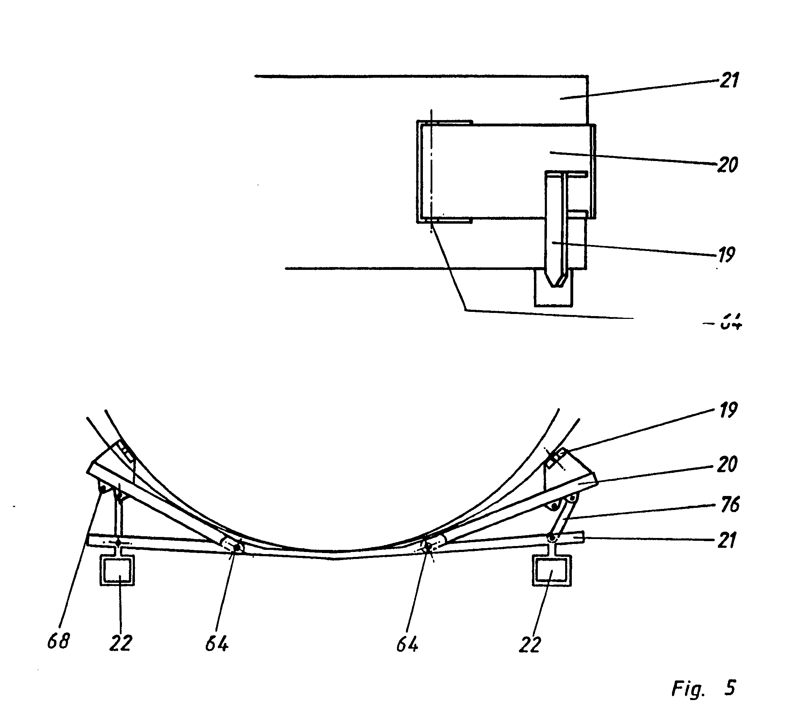

Unabhängig vom Hakenschlitten 15 ist am Kipprahmen 9 der, schematisch in den Fig. 1 und 5 dargestellte Silo-Aufnahmeschlitten 18 geführt. Dieser Silo-Aufnahmeschlitten 18 weist, wie Fig. 5 zeigt, eine Schlittenplatte 21 auf. An dieser Schlittenplatte 21 sind zwei Führungselemente 22 montiert. Diese Führungselemente 22 sind, wie dargestellt, als Kastenprofile ausgebildet und mit der Unterseite der Schlittenplatte 21 über Stege verbunden. Diese Führungselemente 22 werden formschlüssig in den Längsführungen 29, die in Fig. 9 dargestellt sind, geführt. Die in Fig. 5 dargestellten Stege erstrecken sich dabei durch die Schlitze in den Oberseiten der Längsführungen 29. Die Trumme der im vorstehenden beschriebenen Ketten- oder Seilzüge erstrecken sich frei durch diese Führungselemente 22 hindurch. In diesen Führungselementen sind von außen betätigbare, an sich bekannte und nicht dargestellte Klemm- und/oder Schließelemente angeordnet, mit denen diese Führungselemente 22 in Antriebsverbindung mit den Trummen der Antriebsketten oder -seilen 27 gebracht werden können.

An der Schlittenplatte 21 sind, wie bei 64 dargestellt, zwei Schwingen 20 verschwenkbar gelagert. An den Enden der Schwingen 20 sind Silo-Aufnahmezapfen gelagert, die, wie schematisch in Fig. 2 gezeigt, in die Taschen 66 eines Silos 65 beim Auf- und Absetzen eingreifen können. Zur Anpassung an Silos unterschiedlichen Durchmessers wird die Winkellage der Schwingen 20 mittels Hebeln 76 eingestellt. Die Schwingen 20 sind mit einem Ende an der Schlittenplatte 21 drehbar gelagert. Am anderen Ende können sie wahlweise in Augen 68 eingehängt werden, die an der Rückseite der Schwingen 20 montiert sind.

Wie Fig. 4 zeigt, ist für einen Seilabrollbetrieb am Kopf des Kipprahmens 9 eine Seilabrollwinde 67 montiert, die von einem Hydro-Motor-Antrieb 14 angetrieben wird.

Bei der in Fig. 2 dargestellten Ausführungsform ist der Hubzylinder 11 unterhalb des Fahrzeugaufbaurahmens 5, 6 etwa in dessen Mitte montiert. Bei dieser Ausführungsform ist der in Fig. 1 dargestellte Hilfshubzylinder 10 nicht erforderlich. In Fig. 2 ist schematisch ein aufgeladener Silo 65 dargestellt.

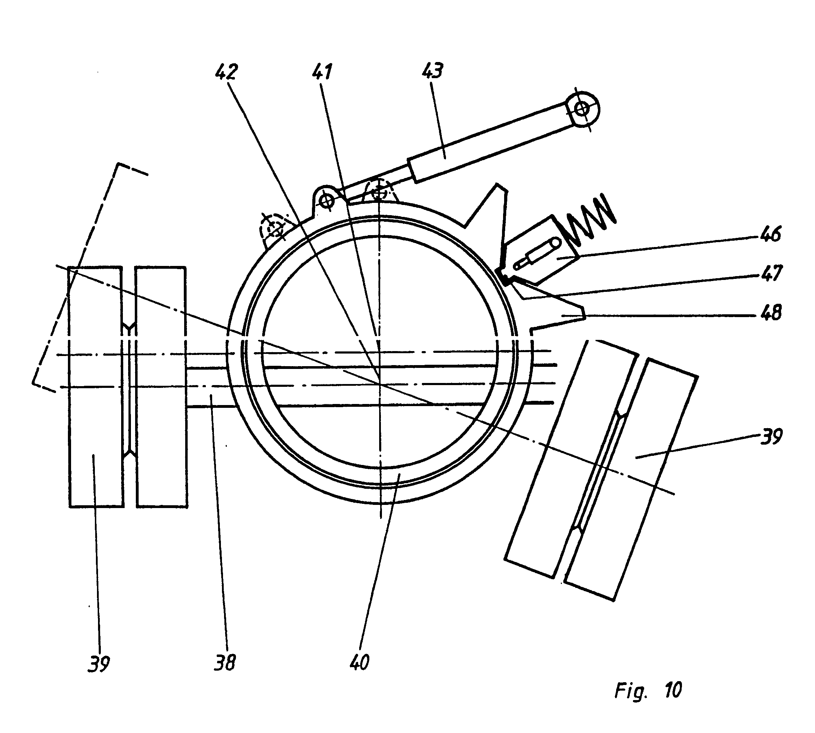

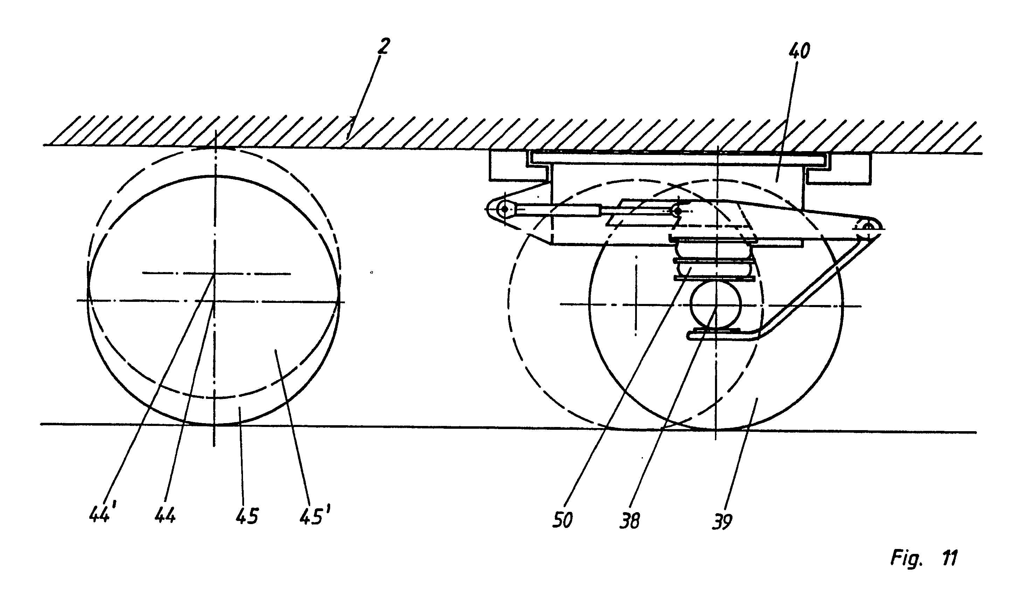

In den Fig. 10 und 11 werden schematisch die Lenkung und das Liften von Fahrzeugachsen gezeigt. Wenn in der vorliegenden Anmeldung von einer Achse die Rede ist, umfaßt dieser Begriff auch Achsaggregate. In Fig. 10 ist schematisch eine Fahrzeugachse 38 mit ihren Rädern 39 dargestellt. Diese Fahrzeugachse 38 ist an einem Drehschemel 40 im Abstand 42 von dessen Drehpunkt 41 montiert. Dadurch wird die Fahrzeugachse 38 durch Straßenreibung nachlaufgelenkt. Für die Lenkung der Fahrzeugachse 38 ist schematisch ein Lenkzylinder 43 gezeigt. Bei 48 ist schematisch eine am Drehschemel 40 ausgebildete Nut dargestellt, in die eine Arretierung 46 mit einem Keil 47 eingreifen kann, um die Lenkung in der Geradeauslaufstellung zu arretieren.

Wie Fig. 2 zeigt, kann eine der Fahrzeugachsen 44 mit ihren Rädern 45 liftbar ausgebildet sein, um aus der in Fig. 11 dargestellten Fahrstellung in die bei 44' und 45' gezeigte Hublage gebracht zu werden. Weiterhin ist in Fig. 11 die Möglichkeit einer achsialen Verschiebung der Fahrzeugachse 38 in Längsrichtung des Fahrzeuges veranschaulicht.

Die Lenkachsen können liftbar sein. Die Anordnung der Lenk- und Liftachsen wird den gewünschten Bedingungen entsprechend vorgenommen. Durch die Anordnung von Lenkachsen wird eine Manövrierfähigkeit auch auf engem Raum ermöglicht, insbesondere wird das Auf- und Absetzen von Behältern, Silos, Containern und dergleichen an vorbestimmten Stellen wesentlich erleichtert.

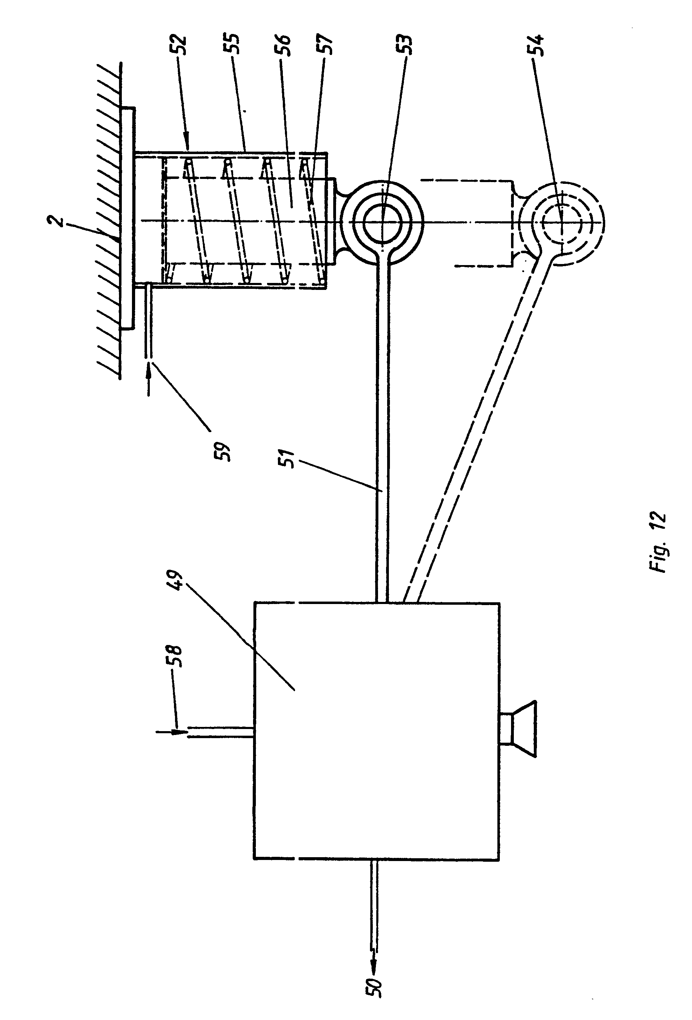

In Fig. 12 ist ein Steuerventil 49 schematisch dargestellt, das an einer luftgefederten Achse montiert ist.

5

Dieses Steuerventil 49 steuert den Druck in einer Luftfederung. Bei 58 wird Druckluft zugeführt. Diese Druckluft wird in vom Steuerventil 49 gesteuerter Weise der Luftfederung 50 zugeführt. Bisher war es üblich, einen Betriebspunkt des Steuerventils 49 dadurch festzulegen, daß das Steuerglied des Steuerventils 49 über eine Schwinge 51 mit einem Einstellglied 52 verbunden ist. Dieses Einstellglied 52 wird vom Fahrzeughersteller eingestellt und in der eingestellten Lage arretiert. Dieses Einstellglied 52 ist als Stellzylinder 55 ausgebildet, der mit einer Luftdrucksteuerleitung 59 in Verbindung steht. In diesem Stellzylinder 55 ist ein mittels einer Rückholfeder 57 beaufschlagter Kolben 56 angeordnet. Mittels dieses Stellzylinders 55 kann beispielsweise die Schwinge 51 in die beiden bei 53 und 54 dargestellten Endstellungen gebracht werden. Damit können unterschiedliche Steuercharakteristiken des Steuerventils 49 eingestellt werden. Durch die erfindungsgemäße Ausbildung der Luftfederung wird es einerseits möglich, die gesamte Höhe des Transportfahrzeuges auf ebener Straße auf dem Transportwege auf das gesetzlich zulässige Höchstmaß zu beschränken oder andererseits bei erforderlichem Achsausgleich die für unebenes Baustellengelände notwendige Bodenfreiheit einzustellen.

## Patentansprüche

1. Transportfahrzeug mit mindestens einem Hebezeug zum Auf- und Absetzen von Silos und/oder Containern und einem geländegängigen ein- oder mehrachsigen Fahrgestell und ferner mit einem am Heck des Fahrzeugaufbaurahmens schwenkbar gelagerten, hydraulisch heb- und senkbaren Kipprahmen, der zwei Längsträger aufweist, dadurch gekennzeichnet, daß auf den Längsträgern (34) jeweils eine Container-Silo-Aufnahmeschiene (17) verfahrbar geführt ist, zwischen denen mindestens zwei Längsführungen (29) im Abstand voneinander angeordnet sind, an denen ein Hakenschlitten (15) und ein Silo-Aufnahmeschlitten (21) verfahrbar geführt sind.

2. Transportfahrzeug nach Anspruch 1, dadurch gekennzeichnet, daß der Hakenschlitten (15) eine an den Längsführungen (29) geführte Gleitplatte (27) aufweist, an deren heckseitiger Querkante (26) eine hydraulisch verschwenkbare Kippplatte (25) angelenkt ist, auf der zwei hydraulisch verschwenkbare, gewölbte Hakenschalen (23, 24) an zwei Schwenklagern (12) montiert sind, und daß an der Unterseite der Gleitplatte (27) in die Längsführungen (29) eingreifende Führungselemente (28) angeordnet sind, von denen zwei in Antriebsverbindung mit am Kipprahmen (9) montierten angetriebenen Ketten- oder Seilzügen (14, 31, 32, 30, 33, 37) stehen.

3. Transportfahrzeug nach einem der Ansprüche 1 oder 2, dadurch gekennzeichnet, daß der Silo-Aufnahmeschlitten eine an den Längsführungen (29) geführte Schlittenplatte (21) aufweist, an deren Unterseite in die Längsführungen (29) eingreifende Führungselemente (28) angeordnet sind, die wahlweise mit den am Kipprahmen (9) montierten, angetriebenen Ketten- oder Seilzügen (14, 31, 32, 30, 33, 37) in Eingriff bringbar sind, daß in der Schlittenplatte (21) an, im Abstand voneinander und von deren Seitenkanten, parallel zu diesen gerichteten Schwenklagern (36) in wahlweise vorbestimmten Winkellagen gegenüber der Schlittenplatte (21) festlegbare Schwingen (20) gelagert sind, an denen Silo-Aufnahmezapfen (19) montiert sind.

4. Transportfahrzeug nach mindestens einem der Ansprüche 1 bis 3, dadurch gekennzeichnet, daß am Kopf des Kipprahmens (9) ein Hydro-Motor-Antriebssatz (13,14) vorgesehen ist, der einerseits mit einer Seilabrollwinde (67) in Antriebsverbindung steht und andererseits (14) mit in den Längsführungen (29) geführten Ketten- oder Seilzügen (37, 32, 30, 33) und daß die Führungselemente (28) des Silo-Aufnahmeschlittens (18) wahlweise mit den in den Längsführungen (29) geführten Trimmen des Ketten- oder Seilzuges (37) in Antriebsverbindung bringbar sind.

5. Transportfahrzeug nach mindestens einem der Ansprüche 1 bis 4, dadurch gekennzeichnet, daß wenigstens eine der Fahrzeugachsen (38, 44) des Transportfahrzeuges mittels einer gesonderten Lenkung frei dreh- und lenkbar und gegebenenfalls nachlaufgelenkt ausgebildet ist.

6. Transportfahrzeug nach mindestens einem der Ansprüche 1 bis 5, dadurch gekennzeichnet, daß wenigstens eine der Fahrzeugachsen (38, 44) als Liftachse ausgebildet ist.

7. Transportfahrzeug nach mindestens einem der Ansprüche 1 bis 6, dadurch gekennzeichnet, daß wenigstens eine der Fahrzeugachsen (38, 44) in Längsrichtung des Fahrzeuges verschiebbar ist.

8. Transportfahrzeug nach mindestens einem der Ansprüche 1 bis 7, dadurch gekennzeichnet, daß mindestens eine luftgefederte Achse (38) vorgesehen ist, an der ein Luftdrucksteuerventil (49) montiert ist, die über ein Einstellglied (52) mit dem Fahrzeug (2) verbunden ist, und daß das Einstellglied (52) als mit einer Rückholfeder (57) beaufschlagter, luftdruckgesteuerter Stellzylinder (55) ausgebildet ist.

9. Transportfahrzeug nach mindestens einem der Ansprüche 1 bis 8, dadurch gekennzeichnet, daß an der Unterseite des Fahrzeugaufbaurahmens (5, 6) mindestens ein Satz Stützbeine (7, 8) montiert ist.

## Claims

1. Transport vehicle with at least one lift mechanism for picking up and setting down silos and/or containers and with a single or multi-axle chassis suitable for cross-country work and furthermore with a hydraulically lifted and lowered tip-up frame which is swivel mounted to the rear of the vehicle structure frame and which has two longitudinal supports characterised in that a container-silo pick-up rail (17) is movably guided on each longitudinal support (34) whereby two longitudinal guides (29) at least are mounted spaced from each other between the pick-up rails (17) and a hook slide (15) and a silo pick-up slide (21) are movably guide on the longitudinal guides (29).

2. Transport vehicle according to claim 1 characterised in that the hook slide (15) has a glide plate (27) guided on the longitudinal guides (29) whereby a hydraulically swivelling tip-up plate (25) is attached to the rear-side transverse edge (26) of the glide plate (27) and supports two hydraulically swivelling curved hook dishes (23, 24) on two swivel bearings (12), and that on the underneath of :he glide plate (27) there are guide elements (28) which engage in the longitudinal guides (29) and of which two are in driving connection with driven chain or cable pulleys (14, 31, 32, 30, 33, 37) mounted on the tip-up frame (9).

3. Transport vehicle according to one of Claims 1 or 2 characterised in that the silo pick-up slide has a slide plate (21) which is guided on the longitudinal guides (29) and on whose underneath there are guide elements (28) which engage into the longitudinal guiles (29) and which can be brought selectively into engagement with the driven chain or cable pulleys (14, 31, 32, 30, 33, 37) mounted on the tip-up frame (9), and that pinions (20) are mounted in the slide plate (21) fixable at selectively predetermined angular positions relative to the slide plate (21) on swivel bearings (36) which are spaced from each other and from the side edges parallel thereto, wherein silo pick-up pins (19) are mounted on the pinions.

4. Transport vehicle according to at least one of Claims 1 to 3 characterised in that at the tip of the tip-up frame (9) there is a hydro-motor drive assembly (13, 14) which is in driving connection on one side with a cable unwind winch (67) and on the other side (14) with chain or cable pulleys (37, 32, 30, 33) which are guided in longitudinal guides (29) and that the guide elements (28) of the silo pick-up slide (18) can be brought selectively into driving connection with the bands of the chain or cable pulley (37) guided in the longitudinal guides (29).

5. Transport vehicle according to at least one of Claims 1 to 4 characterised in that at least one of the vehicle axles (38, 44) of the transport vehicle is designed by means of a separate steering to be freely rotatable and steerable and if required to follow the main steering.

6. Transport vehicle according to at least one of Claims 1 to 5 characterised in that at least one of the vehicle axles (38, 44) is designed as a lift axle.

7. Transport vehicles according to at least one of Claims 1 to 6 characterised in that at least one of the vehicle axles (38, 44) is displaceable in the longitudinal direction of the vehicle.

8. Transport vehicle according to at least one of Claims 1 to 7 characterised in that at least one air-sprung axle (38) is provided on which an air pressure control valve (49) is mounted which is connected to the vehicle (2) by an adjustment member (52) and that the adjustment member (2) is designed as an air-pressure-controlled servo cylinder (55) impinged by a resetting spring (57).

9. Transport vehicle according to at least one of Claims 1 to 8 characterised in that at least one set of support legs (7, 8) is mounted on the underneath of the vehicle structure frame (5, 6).

## Revendications

1. Dispositif de transport avec au moins un engin de levage pour soulever et déposer des silos et/ou des conteneurs et un châssis de roulage à un ou plusieurs axes pouvant se déplacer sur le terrain et qui présente en outre un cadre pouvant être soulevé et basculé par un dispositif hydraulique monté à pivot à l'arrière du châssis du véhicule, ce cadre présentant deux supports longitudinaux, caractérisé en ce qu'un rail de reprise de conteneur ou de silo (17) peut se déplacer sur les supports longitudinaux (34) entre lesquels au moins deux guides longitudinaux (29) sont disposés à une certaine distance l'un de l'autre et sur lesquels un coulisseau à crochet (15) et un coulisseau de reprise de silo (21) peuvent se déplacer en étant guidés.

2. Véhicule de transport selon la revendication 1, caractérisé en ce que le coulisseau à crochet (15) présente une plaque le glissière (27) guidée sur les guides longitudinaux (29),tandis qu'une plaque basculante hydrauliquement (25) est articulée à son bord transversal (26) du côté de l'arrière et sur laquelle sont montées deux coquilles de crochet (23, 24) cintrées qui peuvent pivoter hydrauliquement sur deux supports de pivotement (12) et en ce que, sur la face inférieure de la plaque de glissière (27), sont disposés des éléments de guidage (28) s'engageant dans les guides longitudinaux (29) et depuis lesquels deux tirants à chaîne ou à câble (14, 31, 32, 30, 33, 37), sont montés avec assemblage mécanique, avec un cadre basculant (9).

3. Véhicule de transport selon l'une des revendications 1 ou 2, caractérisé en ce que le coulisseau de reprise de silo présente une plaque de coulisseau (21) guidée sur les guides longitudinaux (29) et que, sur sa face inférieure, sont disposés des éléments de guidage (28) s'engageant dans les guides longitudinaux (29) qui peuvent être connectés au choix avec des tirants à chaîne ou à câble (14, 31, 32, 30, 33, 37) entraînés et montés sur le cadre basculant (9), en ce que des bielles (20) sont montées dans la plaque de coulisseau (21) et peuvent être fixées à une certaine distance l'une de l'autre et des bords latéraux de cette plaque, parallèlement aux supports de pivotement (36), avec des positions angulaires déterminées arbitrairement à l'avance par rapport à la plaque de coulisseau (21) et sur lesquelles sont montées des broches de reprise de silo (19).

4. Véhicule de transport selon au moins l'une des revendications 1 à 3, caractérisé en ce qu'un système d'entraînement à moteur hydraulique (13, 14) est prévu sur le dessus du cadre basculant (9), ce système étant raccordé mécaniquement avec un treuil de déroulement de câble (67) et, d'autre part, (14) avec les tirants à chaîne ou à câble (37, 32, 30, 33) guidés dans les guides longitudinaux (29), et en ce que les éléments de guidage (28) du coulisseau de reprise de silo (18) peuvent être mis en connexion mécanique avec, au choix, les brins guidés dans les guides longitudinaux (29) des tirants à chaîne ou à câble (37).

5. Véhicule de transport selon au moins l'une des revendications 1 à 4, caractérisé en ce qu'au moins l'un des essieux du véhicule (38, 44) du véhicule de transport est disposé avec possibilité de rotation et de direction libre et, éventuellement, à orientation de poursuite au moyen d'une direction spéciale.

6. Véhicule de transport selon au moins l'une des revendications 1 à 5, caractérisé en ce qu'au moins l'un des essieux du véhicule (38, 44) est disposé sous forme d'axe de levage.

7. Véhicule de transport selon au moins l'une des revendications 1 à 6, caractérisé en ce qu'au moins l'un des essieux du véhicule (38, 44) peut se déplacer dans la direction longitudinale du véhicule.

8. Véhicule de transport selon au moins l'une des revendications 1 à 7, caractérisé en ce qu'au moins un essieu à suspension pneumatique (38) est prévu avec une vanne de commande de pression d'air (29) montée sur celui-ci et connectée par un élément de réglage (52) avec le véhicule, et en ce que l'élément de réglage (52) se présente sous forme d'un cylindre de commanda (55) commandé par la pression d'air et sur lequel agit un ressort de rappel (57).

9. Véhicule de transport selon au moins l'une des revendications 1 à 8, caractérisé en ce qu'au moins un ensemble de béquilles de support (7, 8) est monté sur la face intérieure du cadre de montage du véhicule (5, 6).

Fig. 1

EP 0 286 576 B1

Fig. 2

Fig. 3

EP 0 286 576 B1

Fig. 4

Fig. 5

EP 0 286 576 B1

Fig. 6

Fig. 7

EP 0 286 576 B1

Fig. 8

16

Fig. 9

17

Fig. 10

Fig. 11

Fig. 12

EP 0 286 576 B1